(19) **Europäisches Patentamt / European Patent Office / Office européen des brevets**

(11) **EP 1 745 674 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(21) Anmeldenummer: **05744543.9**

(22) Anmeldetag: **25.04.2005**

(51) Int Cl.:
**H04W 64/00** (2009.01)

(86) Internationale Anmeldenummer:
**PCT/DE2005/000774**

(87) Internationale Veröffentlichungsnummer:
**WO 2005/112498 (24.11.2005 Gazette 2005/47)**

(54) **VERFAHREN ZUR LOKALISIERUNG EINES MOBILFUNKENDGERÄTES IN EINEM MOBILFUNKNETZ**

METHOD FOR LOCATING A MOBILE RADIO TERMINAL IN A MOBILE RADIO NETWORK

PROCEDE POUR LOCALISER UN TERMINAL DE RADIOTELEPHONIE MOBILE DANS UN RESEAU DE RADIOTELEPHONIE MOBILE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **14.05.2004 DE 102004025129**

(43) Veröffentlichungstag der Anmeldung:
**24.01.2007 Patentblatt 2007/04**

(73) Patentinhaber: **Cinterion Wireless Modules GmbH 81669 München (DE)**

(72) Erfinder:
• **ANG, Jian Zhong 14052 Berlin (DE)**

• **KÖHLER, Bert-Uwe 14612 Falkensee (DE)**
• **SIMON, Carsten 16761 Hennigsdorf-Niederneuend (DE)**

(74) Vertreter: **Eisenführ, Speiser & Partner Anna-Louisa-Karsch-Strasse 2 10178 Berlin (DE)**

(56) Entgegenhaltungen:
**EP-A- 1 014 103      WO-A-03/023440
US-A- 5 630 208      US-A1- 2001 004 601**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Lokalisierung eines Mobilfunkendgerätes über die Bestimmung des Abstandes zwischen dem Mobilfunkendgerät und Basisstationen eines Mobilfunknetzes, sowie eine entsprechende Lokalisierungseinrichtung, ein Mobilfunkendgerät und eine Basisstation.

Die Lokalisierung eines Mobilfunkendgerätes in einem Mobilfunknetz bildet die Voraussetzung für die Realisierung der zahlreichen sogenannten "Location Services". Dies sind Dienste, die auf unterschiedliche Weise von Informationen bezüglich der Position des Endgerätes bzw. des Gerätebenutzers Gebrauch machen. Hierzu zählen neben der automatischen Übermittlung der Position bzw. des Ortes im Falle eines Notrufs die positionsabhängige Vergebührung, positionsabhängige Verbindungsaufbauverfahren sowie die Positionsverfolgung etwa im Rahmen der Verkehrsüberwachung oder des Flottenmanagements.

Eines der einfachsten Lokalisierungsverfahren beruht darauf, die Zelle zu bestimmen, in der sich das Endgerät befindet. Hierdurch erhält man in den Kernbereichen von Großstädten, bei denen die Zellradien in Bereichen von einigen hundert Metern liegen, bereits verwertbare Angaben. In ländlichen Gebieten mit ihren großen Zellen sind Genauigkeiten im Bereich von mehreren Kilometern jedoch nicht ausreichend.

Genauere Verfahren setzen teure Zusatzeinrichtungen voraus. Bei OTD("Observed Time Difference")-Verfahren ist die Mobilstation aufwendig dafür ausgebildet, die Differenz zwischen den Ankunftszeiten bestimmter Signale, die von mehreren Basisstationen abgestrahlt werden, zu bestimmen. Alternativ oder zusätzlich kann eine Mobilstation auch mit einem teuren GPS-Empfänger ausgestattet sein.

Andere Verfahren setzen Zusatzeinrichtungen im Mobilfunknetz voraus, was ebenfalls großen Aufwand bedeutet. So basieren viele ToA("Time of Arrival")-Verfahren darauf, an mehreren bekannten Orten die Ankunftszeiten eines von der Mobilstation ausgesandten Signals zu messen. Hierfür sind an zahlreichen Stellen im Netz sogenannte LMUs ("Location Messurement Units") zu platzieren.

Ein einfaches ToA-Verfahren, welches ohne teure Zusatzeinrichtungen im Netz und mit geringen Modifikationen am Mobilfunkendgerät auskommt, besteht darin, die Zeitverzögerung bei der Signalübermittlung zwischen Endgerät und Basisstation für die Abstandsbestimmung zu nutzen. Diese Zeitverzögerung wird beispielsweise in einem GSM-System zur Synchronisierung der Uplink-Bursts auf das Zeitschlitzraster der Basisstation beim Verbindungsaufbau von der Basisstation ermittelt.

Hierbei wird aus den von der Mobilstation ausgesendeten Access Bursts die Signallaufzeit zwischen Basisstation und Mobilfunkendgerät bestimmt. Die Basisstation weist die Mobilstation an, ihren Aussendezeitpunkt entsprechend einzurichten, d.h. vorzuverlegen. Diese Vorverlegung ("Timing Advance", TA) wird in Vielfachen der Bitperiode angegeben (bspw. beim GSM-System 3,7 $\mu$s).

Üblicherweise wird der TA-Wert in der Basisstation vermessen. Über die Lichtgeschwindigkeit kann aus der Signallaufzeit auf die Länge der Funkstrecke zwischen Basis- und Mobilstation geschlossen werden. Zur Lokalisierung des Mobilfunkendgerätes werden üblicherweise wenigstens drei Basisstationen bzw. die von diesen ermittelten TA-Werte herangezogen.

Zur Positionsermittlung wird eine bedingte Wahrscheinlichkeitsdichteverteilung $p(x|TA)$ aufgestellt, die die Wahrscheinlichkeit des Abstandes x zwischen Basisstation und Mobilfunkendgerät bei gegebenem TA-Wert statistisch erfasst. Eine solche Verteilung kann etwa aus Messungen im Feld gewonnen werden. Genauer gesagt, wird eine Verteilung für jeden möglichen TA-Wert (von Null bis zu einem maximalen Abstand) definiert. Insbesondere die Verteilungen für kleine TA-Werte nahe Null sind dabei unsymmetrisch, wodurch der Tatsache Rechnung getragen wird, das von Null verschiedene Wahrscheinlichkeitswerte für Abstände < 0 unsinnig sind. Diese Zusammenhänge sind dem Fachmann bekannt und werden deshalb der weiteren Diskussion zu Grunde gelegt, ohne dass hierauf jedes mal explizit hingewiesen wird.

Wäre nur der Abstand zu einer Basisstation zu ermitteln, könnte somit aus dem durch die Basisstation bestimmten TA-Wert und aus dem Maximum der Wahrscheinlichkeitsdichteverteilung p (das nicht bei |TA - x| = 0 liegen muss) der wahrscheinlichste Abstand x_w ermittelt werden.

Eine Lokalisierung des Mobilfunkendgerätes über die TA-Werte der Mehrzahl von Basisstationen erfolgt in der Praxis durch die Optimierung der Kostenfunktion $K = \pi\_i\ p(x\_i|TA\_i)$. Nachdem so ein Satz von wahrscheinlichsten Abständen des Endgerätes von den Basisstationen ermittelt worden ist, kann aus den bekannten Positionen der Basisstationen die geographische Position des Mobilfunkendgerätes ermittelt werden.

Dieses bekannte Lokalisierungsverfahren basiert darauf, dass die von den Basisstationen gemessenen bzw. bestimmten Funkstreckenlängen, d.h. die TA-Werte, korrekt sind. Die Länge der Funkstrecke zwischen Basis- und Mobilstation muss aber nicht unbedingt mit dem geographischen Abstand zwischen Mobilfunkendgerät und Basisstation identisch sein. So kann es bei Mehrwegeausbreitung zu erheblichen Abweichungen zwischen der Länge der Funkstrecke und dem geometrischen Abstand kommen. Dies ist insbesondere dann der Fall, wenn die Hauptausbreitungsrichtung durch einen Reflexionspfad statt durch den direkten Pfad gegeben ist.

Fehlerhafte TA-Werte führen zu einer fehlerhaften Anwendung des Lokalisierungsmodells, d.h. der Wahrscheinlichkeitsdichteverteilung p, und damit zu Fehlern in der Lokalisierung der Mobilstation.

Dokument US 2001/004601 A1 versucht das Problem eines verbesserten Verfahrens zur Lokalisierung von Mobilfunkendgeräten dadurch zu lösen, dass ein Referenzempfänger in einer bestimmten Entfernung zu den Basisstationen festgelegt wird, die von den Basisstationen an den Referenzempfänger übermittelte Signalankunftszeiten gemessen werden, die relativen Zeitversätze der Basisstationen mittels der Entfernungswerten zwischen dem Referenzempfänger und den Basisstationen, sowie die Ankunftszeiten bestimmt werden und der Ort des Mobilfunkendgeräts mittels der relativen übermittelten Zeitversätze und der hyperbolischen Lokalisierungstechnik berechnet wird.

Es ist daher als eine Aufgabe der vorliegenden Erfindung anzusehen, ein verbessertes Lokalisierungsverfahren vorzuschlagen, bei dem die Unterschiede zwischen der Länge einer Funkstrecke zwischen Mobilfunkendgerät und Basisstation und ihrem gegenseitigen Abstand berücksichtigt werden, um zu einer genaueren Abstandsbestimmung zu gelangen, wobei das Verfahren sowie die zur Durchführung des Verfahrens verwendeten Lokalisierungseinrichtungen einfach und kostengünstig bleiben.

Diese Aufgabe wird durch ein Lokalisierungsverfahren mit den Merkmalen des Anspruchs 1 sowie eine Lokalisierungseinrichtung mit den Merkmalen des Anspruchs 11 gelöst.

Die Erfindung beruht u.a. wesentlich auf der Erkenntnis, dass die Güte der Lokalisierung des Mobilfunkendgerätes sehr stark von der Güte der einzelnen TA-Werte abhängt. Je ungenauer ein gemessener TA-Wert den geometrischen Abstand zwischen Basisstation und Mobilstation beschreibt, desto ungenauer ist eine darauf basierende Lokalisierung des Endgerätes.

Ein wesentlicher Gedanke der Erfindung besteht daher darin, in einem ersten Schritt festzustellen, wie stark eine Mehrwegeausbreitung zwischen Basis- und Mobilstation ausgeprägt ist. In einem zweiten Schritt kann dann die Wahrscheinlichkeitsdichteverteilung des Lokalisierungsmodells entsprechend den Ergebnissen des ersten Schritts modifiziert werden. Insbesondere kann je nach den quantifizierten Ergebnissen des ersten Schritts eine von einer Mehrzahl für jede Funkstreckenlänge vorgegebener Wahrscheinlichkeitsdichteverteilungen für die Abstandsberechnung herangezogen werden. Dieses Verfahren wird für jede Paarung von Mobilstation und Basisstati-on durchgeführt, i. d. R. also wenigstens dreimal, um letztlich das Mobilfunkendgerät zu lokalisieren.

Die Mehrwegeausbreitung ist in der Kanalimpulsantwort der zwischen Mobilfunkendgerät oder Basisstation übermittelten Bursts zu erkennen, indem sich deutlich mehr als ein Maximum oder ein deutlich verbreitertes Maximum ergibt. So ist es herkömmlich (beispielsweise im GSM-System) bekannt, dass das Mobilfunkendgerät bei jedem von einer Basisstation eintreffenden Burst die Kanalimpulsantwort misst, indem sie eine Kreuzkorrelation zwischen der in der Midambel empfangenen und der entsprechenden, in der Mobilstation gespeicherten Trainingssequenz (bei GSM eine Folge mit 26 Bits) bildet. Der Punkt der maximalen Korrelation wird als zeitlicher Mittelpunkt des Bursts angenommen.

Erfindungsgemäß kann nun die ohnehin ermittelte Impulsantwort bzw. Korrelationsfunktion zur Quantifizierung der Mehrwegeausbreitung verwendet werden.

Konkret wird ein Verfahren zur Lokalisierung eines Mobilfunkendgerätes über die Bestimmung des geographischen Abstandes zwischen diesem und Basisstationen eines Mobilfunknetzes vorgeschlagen, wobei für jede Funkstrecke zwischen Mobilfunkendgerät und jeweils einer der Basisstationen eine Funkstreckenlänge bestimmt wird. Weiterhin wird aus den Funkstreckenlängen und einem vorgegebenen Lokalisierungsmodell, durch welches für jede einer Mehrzahl vorgegebener Funkstreckenlängen ein Zusammenhang zwischen Funkstreckenlänge und Abstandswerten definiert wird, der Ort des Mobilfunkendgerätes berechnet.

Erfindungsgemäß werden für jede Funkstrecke Impulsantwortdaten ermittelt, die eine Korrelation von Daten zwischen Mobilfunkendgerät und Basisstation übermittelter Bursts mit einer vorgegebenen Datensequenz repräsentieren. Aus den Impulsantwortdaten wird sodann jeweils ein Wert mindestens einer Kenngröße berechnet, die die Impulsantwort charakterisiert. Schließlich wird eines von mehreren Untermodellen des Lokalisierungsmodells in Abhängigkeit von dem jeweils berechneten Wert der Kenngröße für die Ortsberechnung herangezogen.

Mit der Erfindung kann somit vorteilhaft das Lokalisierungsmodell an die jeweils konkret vorliegenden Verhältnisse der Funkstrecken angepasst werden, um so eine gegenüber den bekannten Verfahren, bei denen nur ein statisches Lokalisierungsmodell verwendet wird, verbesserte Genauigkeit in der Lokalisierung zu erreichen.

In bevorzugten Ausführungsformen des erfindungsgemäßen Verfahrens ist die Kenngröße die mittlere Verzögerungsbreite der Impulsantwort. Mit der mittleren Verzögerungsbreite ist ein Maß für die relative Breite der Impulsantwort gegeben, welche leicht berechnet werden kann und zuverlässig angibt, wie ausgeprägt eine Mehrwegeausbreitung ist. Somit kann die mittlere Verzögerungsbreite zur Anpassung des Lokalisierungsmodells auf sinnvolle Weise genutzt werden.

Ergänzend oder alternativ können die Kenngrößen Positionen und Höhen von mindestens zwei Maxima der Impulsantwort umfassen, insbesondere von erstem Maximum und Hauptmaximum. Liegt zeitlich vor dem Maximum der Impulsantwort ein weiteres großes Maximum, dann handelt es sich hierbei um eine Impulsantwort mit kürzerer Laufzeit, also einen Ausbreitungsweg der näher am direkten Pfad liegt oder sogar den direkten Pfad selbst betrifft. Somit kann aus Position und Höhe von erstem Maximum und Hauptmaximum, bezogen auf das Lokalisierungsmodell, eine Korrektur der Funkstreckenlänge geschätzt werden.

In weiteren bevorzugten Ausgestaltungen des erfindungsgemäßen Verfahrens umfasst das Lokalisierungsmodell als Untermodelle mindestens zwei Wahrscheinlichkeitsdichteverteilungen, die jeweils die Wahrscheinlichkeit von Abstandswerten bei definierten Funkstreckenlängen repräsentieren. Herkömmlich wird nur eine einzige Wahrscheinlichkeitsdichteverteilung für die Korrektur von Funkstreckenlängen verwendet. Die Erfindung erlaubt es, durch Vermessung der Impulsantwort sowie ein automatisiertes Entscheidungsverfahren, die jeweils am besten geeignete Wahrscheinlichkeitsdichteverteilung heranzuziehen, um eine Funkstreckenlänge zwischen dem Mobilfunkendgerät und einer der Basisstationen zu korrigieren. Hierdurch wird eine höhere Genauigkeit der Lokalisierung ermöglicht.

In Ausgestaltungen der vorgenannten Ausführungsform weisen die Wahrscheinlichkeitsdichteverteilungen unterschiedliche Verteilungsbreiten auf. Besitzt eine Impulsantwort eine Mehrzahl von Maxima oder ist sie insgesamt stark verbreitert, folgt daraus auch eine Unsicherheit bei der Korrektur der gemessenen Funkstreckenlänge, um zum geographischen Abstand zu gelangen. Somit sollte auch die Wahrscheinlichkeitsdichteverteilung, also eine Verteilung $p(x\_i|TA\_i)$ wie oben beschrieben, bei großer relativer Breite der Impulsantwort (etwa gemessen durch eine große mittlere Verzögerungsbreite) eine größere Verteilungsbreite aufweisen, als die für den Fall heranzuziehende Wahrscheinlichkeitsdichteverteilung, in dem die Impulsantwort nur ein stark ausgeprägtes Hauptmaximum aufweist.

Die Wahrscheinlichkeitsdichteverteilungen, die das Lokalisierungsmodell ausmachen, können entweder in Form eines Algorithmus vorliegen, aus dem durch unterschiedliche Parameterwahl die jeweils konkret für eine Funkstreckenkorrektur heranzuziehenden Wahrscheinlichkeitsdichteverteilungen hervorgehen. So könnte etwa eine allgemein formulierte Gaußverteilung angenommen werden, für die unterschiedliche Verteilungsbreiten sowie Positionen des Maximums definiert werden können.

Alternativ können die Wahrscheinlichkeitsdichteverteilungen auch unabhängig voneinander vorliegen. In einem derartigen Fall könnten auch unterschiedliche funktionale Zusammenhänge zwischen Wahrscheinlichkeit eines bestimmten Abstands und Funkstreckenlänge angenommen werden; beispielsweise könnte eine Wahrscheinlichkeitsdichteverteilung für eine Impulsantwort geringer Breite als Glockenkurve vorliegen, während die Verteilung für eine Impulsantwort großer Breite eine bezüglich ihres Maximums unsymmetrische Verteilung aufweist.

In weiteren Ausgestaltungen dieser Ausführungsform weisen die Wahrscheinlichkeitsdichteverteilungen unterschiedliche Positionen der Maxima auf. Hierdurch kann den bei unterschiedlich breiten Impulsantworten unterschiedlich auftretenden Fehlern bzw. Abweichungen von Funkstreckenlänge und geographischem Abstand zwischen dem Mobilfunkendgerät und einer Basisstation Rechnung getragen werden. So kann etwa die Wahrscheinlichkeitsdichteverteilung für eine schmale (noch fast einem Einheitsimpuls entsprechende) Impulsantwort ein Maximum bei einem Wert haben, durch den die gemessene Funkstreckenlänge zu größeren Werten hin korrigiert wird, d.h. bei gegebener Funkstreckenlänge ist der wahrscheinlichste Abstand größer als die Funkstreckenlänge. Im Gegensatz dazu kann bei sehr breiter Impulsantwort das Maximum der erfindungsgemäß für diesen Fall heranzuziehenden Wahrscheinlichkeitsdichteverteilung ein Maximum bei Werten haben, die die gemessene Funkstreckenlänge zu kleineren Werten korrigiert, d.h. der geografische Abstand zwischen Endgerät und Basisstation ist sogar kleiner als die bestimmte Funkstreckenlänge.

Die Anpassung des Lokalisierungsmodells erfolgt dann, indem in Abhängigkeit vom Wert der Kenngröße festgestellt wird, welche der Wahrscheinlichkeitsdichteverteilungen für die Bestimmung des Abstandswertes herangezogen wird. Hierdurch wird auf einfache Weise ein eindeutiger Zusammenhang zwischen den Charakteristika der Impulsantwort, d.h. der Güte der Funkstrecke zwischen Mobilfunkendgerät und Basisstation, und der Bestimmung des geografischen Abstandes aus den gemessenen Funkstreckenlängen hergestellt.

In bevorzugten Ausgestaltungen dieser Ausführungsform erfolgt die Feststellung der heranzuziehenden Wahrscheinlichkeitsdichteverteilung anhand einer Klassifikation des Wertes der Kenngröße. So können vorteilhaft in einem Entscheider bzw. Klassifikator vorgegebene Schwellwerte vorliegen. Anhand dieser werden die gemessenen Eigenschaften der Impulsantwort auf die Wahrscheinlichkeitsdichteverteilungen abgebildet. So kann beispielsweise eine oberhalb eines Schwellwertes liegende mittlere Verzögerungsbreite der Impulsantwort dazu führen, dass eine breitere Wahrscheinlichkeitsdichteverteilung herangezogen wird, während für eine unterhalb des Schwellwertes liegende mittlere Verzögerungsbreite der Impulsantwort eine schmalere Wahrscheinlichkeitsdichteverteilung herangezogen wird.

Das erfindungsgemäße Verfahren macht es insbesondere möglich, für jede Funkstreckenlänge zwischen Endgerät und jeweils einer der Basisstationen gesondert eine Wahrscheinlichkeitsdichteverteilung heranzuziehen. So kann etwa bei drei Basisstationen die Funkstrecke zwischen Mobilfunkendgerät und einer ersten der Basisstationen durch einen ausgeprägten einzigen Reflexionspfad charakterisiert sein, so dass das Hauptmaximum der Impulsantwort diesem Pfad entspricht, während die Funkstrecken der beiden weiteren Basisstationen durch viele unterschiedliche Wege charakterisiert sind, mit entsprechend breiten bzw. verschmierten Impulsantworten. Dann kann zur Ermittlung des Abstandes zur ersten Basisstation eine relativ schmale Wahrscheinlichkeitsdichteverteilung herangezogen werden, während für die beiden anderen Funkstreckenlängen eine breitere Wahrscheinlichkeitsdichteverteilung herangezogen wird.

Bei weiteren Ausführungsformen der Erfindung kann (alternativ oder zusätzlich zur Korrektur über Wahrscheinlichkeitsdichteverteilungen) das Lokalisierungsmodell Untermodelle umfassen, die jeweils eine Korrektur der gemessenen Funkstreckenlänge angeben, die aus der Länge der Funkstrecke und mindestens einer Kenngröße berechnet wird. Eine solche Kenngröße könnte etwa die Position des ersten Maximums der Impulsantwort sein. Hierdurch ergibt sich vorteilhaft eine zusätzliche Korrekturmöglichkeit, um den geographischen Abstand aus der Funkstreckenlänge zu bestimmen.

In bevorzugten Ausgestaltungen der vorgenannten Ausführungsform wird die Länge der Funkstrecke mit einem gewichteten Mittelwert aus den Werten der Kenngrößen der Position des Hauptmaximums und des ersten Maximums und der mittleren Verzögerungsbreite korrigiert. Diese Ausführungsform ist insbesondere vorteilhaft, wenn das Lokalisierungsverfahren in dem Mobilfunkendgerät abläuft, die Funkstreckenlänge also von der Basisstation übermittelt wird und die Impulsantwort im Endgerät bestimmt wird. Hierbei nutzt die Basisstation die Uplink-Richtung (auf einer anderen Frequenz) zur Messung der Funkstreckenlänge, während die im Endgerät gemessenen Impulsantworten die Downlink-Richtung charakterisieren. Optimale Gewichtungen können durch Messungen im Feld ermittelt werden.

In zweckmäßigen Ausführungsformen des erfindungsgemäßen Verfahrens wird zur Bestimmung der wahrscheinlichsten Abstandswerte in Bezug auf die Basisstationen eine Kostenfunktion optimiert, die aus der oder den herangezogenen Wahrscheinlichkeitsdichteverteilungen ermittelt wird. Hierdurch können auf einfache Weise die erfindungsgemäß möglicherweise für unterschiedliche Funkstrecken unterschiedlichen Wahrscheinlichkeitsdichteverteilungen in die Bestimmung der Abstandswerte und damit der Lokalisierung des Mobilfunkendgerätes in Bezug auf die bekannten geografischen Positionen der Basisstationen einbezogen werden.

Die Vorteile und Zweckmäßigkeiten erfindungsgemäßer Lokalisierungseinrichtungen ergeben sich aus den Vorteilen und Zweckmäßigkeiten des erfindungsgemäßen Verfahrens. Insbesondere weist eine Lokalisierungseinrichtung zur Durchführung des erfindungsgemäßen Verfahrens ein Einlesemodul zum Einlesen von Funkstreckenlängen zwischen einem Mobilfunkendgerät und Basisstationen eines Mobilfunknetzes aus einer Speichereinrichtung der Basisstation oder des Mobilfunkendgerätes auf, sowie eine Speichereinheit zum Speichern eines Lokalisierungsmodells und ein mit dem Einlesemodul und der Speichereinheit verbundenes Ortsbestimmungsmodul zum Bestimmen des wahrscheinlichsten Ortes des Mobilfunkendgerätes aus den Funkstreckenlängen und dem Lokalisierungsmodell.

Erfindungsgemäß weist die Lokalisierungseinrichtung weiterhin ein Impulsantwort-Ermittlungsmodul zum Ermitteln von Impulsantwortdaten für jede Funkstrecke auf, die eine Korrelation von Daten von zwischen Mobilfunkendgerät und der Basisstation übermittelten Bursts repräsentieren. Ferner liegt ein mit dem Impulsantwort-Ermittlungsmodul verbundenes Kenngrößen-Berechnungsmodul zur Berechnung eines Wertes mindestens einer die Impulsantwort charakterisierende Kenngröße aus den Impulsantwortdaten vor. Schließlich liegt ein mit dem Kenngrößen-Berechnungsmodul verbundenes Untermodell-Auswahlmodul zur Anpassung des Lokalisierungsmodells in Abhängigkeit von dem im Berechnungsmodul berechneten Wert der Kenngröße vor.

In bevorzugten Ausführungsformen ist die Lokalisierungseinrichtung derart ausgebildet, dass eine Mehrzahl von Wahrscheinlichkeitsdichteverteilungen in der zweiten Speichereinheit in Form einer oder mehrerer Lookup-Tables abgelegt ist. Hierdurch ist ein schneller Zugriff beispielsweise auf die abgelegten Wahrscheinlichkeitsdichteverteilungen möglich, ohne dass prozessorbelastende Berechnungsschritte (etwa im Mobilfunkendgerät) erforderlich sind.

In weiteren Ausführungsformen ist das Untermodell-Auswahlmodul in der erfindungsgemäßen Lokalisierungseinrichtung ausgebildet, um in Abhängigkeit vom Wert der Kenngröße für jede Funkstrecke eine der in der Speichereinheit gespeicherten Wahrscheinlichkeitsdichteverteilungen für das Ortsbestimmungsmodul zu bestimmen. Das Ortsbestimmungsmodul ist dann zweckmäßig ausgebildet, die bestimmte Wahrscheinlichkeitsdichteverteilung für die Ortsbestimmung heranzuziehen.

Bevorzugt verfügt eine erfindungsgemäße Lokalisierungseinrichtung über ein mit dem Kenngrößen-Berechnungsmodul und dem Untermodell-Auswahlmodul verbundenes Klassifikationsmodul zum Klassifizieren der von dem Kenngrößen-Berechnungsmodul berechneten Kenngröße und Weiterleiten des Klassifizierungsergebnisses an das Untermodell-Auswahlmodul.

Ist die erfindungsgemäße Lokalisierungseinrichtung in einem Mobilfunkendgerät implementiert, wird ein Wert für eine Funkstreckenlänge von der jeweiligen Basisstation übermittelt und in die Lokalisierungseinrichtung eingelesen. Die von dem Impulsantwort-Ermittlungsmodul ermittelten Impulsantwortdaten bzw. -datensequenzen repräsentieren die Impulsantwort von Bursts, die von der Basisstation an das Mobilfunkendgerät übermittelt werden.

Ist die erfindungsgemäße Lokalisierungseinrichtung in einer Basisstation, einer MSC oder sonst einer Einrichtung im Mobilfunknetz implementiert oder dieser zugeordnet, repräsentieren die von dem Impulsantwort-Ermittlungsmodul ermittelten Impulsantwortdaten bzw. -datensequenzen die Impulsantwort von Bursts, die von dem Mobilfunkendgerät an die Basisstation das übermittelt werden.

Weitere Aspekte, Vorteile und Zweckmäßigkeiten der Erfindung ergeben sich aus der nachfolgenden Beschreibung eines Ausführungsbeispiels der Erfindung anhand der Figuren. Von diesen zeigt:

Fig. 1 in Form eines schematischen Blockschaltbildes die funktionalen Komponenten einer erfindungsgemäßen Lokalisierungseinrichtung für ein Mobilfunkendgerät;

Fig. 2 ein Ablaufdiagramm für einen Lokalisierungsvorgang des zu der Lokalisierungseinrichtung der Fig. 1 gehörenden Mobilfunkendgerätes;

Fig. 3 typische Impulsantworten von einer ersten Basisstation ausgesendeter Bursts bei Mehrwegeausbreitung mit geringen Laufzeitunterschieden;

Fig. 4 typische Impulsantworten von einer zweiten Basisstation ausgesendeter Bursts bei Mehrwegeausbreitung mit mittleren und großen Laufzeitunterschieden;

Fig. 5 typische Impulsantworten von einer dritten Basisstation ausgesendeter Bursts bei Mehrwegeausbreitung mit großen Laufzeitunterschieden;

Fig. 6 eine Wahrscheinlichkeitsdichte $p\_1(x|TA)$ für eine geringe mittlere Verzögerungsbreite;

Fig. 7 eine Wahrscheinlichkeitsdichte $p\_2(x|TA)$ für eine große mittlere Verzögerungsbreite.

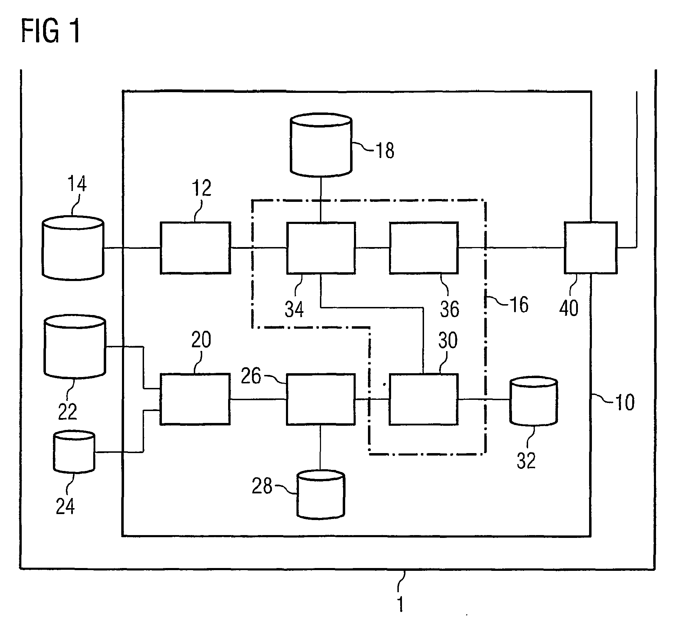

Fig. 1 zeigt schematisch die erfindungswesentlichen Komponenten einer zum Einbau in ein Mobilfunkendgerät 1 vorgesehenen Lokalisierungseinrichtung 10. Die Einrichtung 10 verfügt über ein Einlesemodul 12 zum Einlesen von Funkstreckenlängen bzw. Timing-Advance(TA)-Werten aus einer zur Speicherung dieser Werte vorgesehenen Speichereinheit 14 des Mobilfunkendgerätes 1 auf. In dem in Fig. 1 nicht weiter angedeuteten GSM-System werden die TA-Werte über den Access Grant Chanel an das Mobilfunkendgerät 1 übermittelt, das die TA-Werte in der Speichereinheit 14 speichert. Der in der Einheit 14 gespeicherte TA-Wert derjenigen Basisstation, über die die Verbindungen des Endgerätes 1 verlaufen, wird herkömmlich zur bitgenauen Synchronisierung des Endgerätes auf das von der Basisstation vorgegebene Zeitschlitzraster verwendet.

Das Einlesemodul 12 übergibt die eingelesenen TA-Werte (typischerweise von drei oder mehr Basisstationen) an ein zentrales Ortsbestimmungsmodul 16 der Lokalisierungseinrichtung 10.

Das Ortsbestimmungsmodul 16 ist mit einer Speichereinheit 18 zur Speicherung des von der Lokalisierungseinrichtung 10 verwendeten Lokalisierungsmodells verbunden. Herkömmlich besteht ein Lokalisierungsmodell aus einem Ensemble von Wahrscheinlichkeitsdichteverteilungen, nämlich genau einer einzigen Wahrscheinlichkeitsdichteverteilung $p(x|TA)$ für einen jeden der in dem verwendeten GSM-System möglichen ganzzahligen TA-Werte von 0 bis 63. Für die Klarheit der Darstellung sind diese Aspekte, die dem Fachmann bekannt sind, in der weiteren Beschreibung und den Figuren nicht explizit berücksichtigt.

In dem hier beschriebenen Beispiel sind zwei (Ensembles von) Wahrscheinlichkeitsdichteverteilungen $p\_1$ und $p\_2$, die weiter unten genauer diskutiert werden, in Form jeweils einer Lookup-Table in der Speichereinheit 18 gespeichert. Auf die genaue Funktionsweise des Ortsbestimmungsmoduls 16 wird ebenfalls weiter unten detailliert eingegangen.

Die Lokalisierungseinrichtung 10 verfügt weiter über ein Impulsantwort-Ermittlungsmodul 20. Im Modul 20 wird eine Kreuzkorrelation zwischen den Midambeln der jeweils letzten zehn Bursts, die von einer bestimmten Basisstation empfangen wurden (und im Zwischenspeicher 22 des Mobilfunkendgerätes gespeichert werden) und der entsprechenden Trainingssequenz durchgeführt, die in einer Speichereinheit 24 des Mobilfunkendgerätes fest gespeichert ist. Dem Fachmann ist offensichtlich, dass statt der letzten zehn Bursts auch eine andere Anzahl von Bursts herangezogen werden könnte, beispielsweise nur ein oder wenige Bursts oder auch mehr als zehn Bursts.

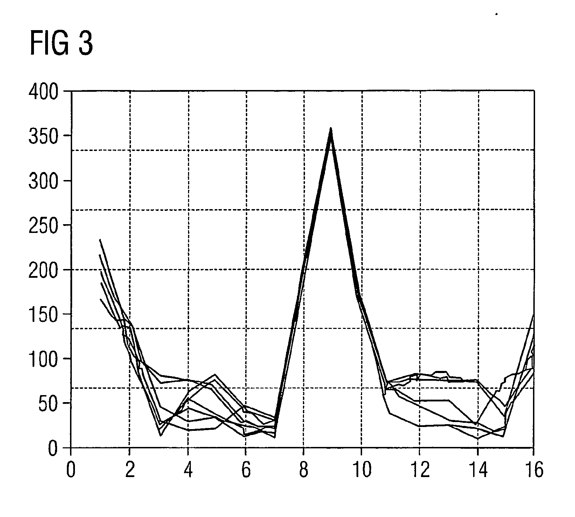

Das Ergebnis der Kreuzkorrelation ist eine Folge von Abtastwerten bzw. Impulsantwortdaten. Diese werden unten anhand der Figuren 3 bis 5 genauer besprochen. Die Impulsantwortdaten bzw. -datensequenzen werden einem Kenngrößen-Berechnungsmodul 26 zugeführt, das die jeweils letzten zehn Datensequenzen für jede Basisstation in einem Zwischenspeicher 28 zwischenspeichert. Gleichzeitig berechnet das Modul 26 aus den jeweils letzten zehn Impulsantwort-Datensequenzen eine mittlere Verzögerung $\mu$ und eine mittlere Verzögerungsbreite s, über die ebenfalls unten genauer zu sprechen sein wird.

Die berechnete mittlere Verzögerungsbreite s, die jeweils die Impulsantwort einer Funkstrecke zwischen dem Mobilfunkendgerät 1 und genau einer Basisstation charakterisiert, wird einem Klassifikationsmodul 30 im Ortsbestimmungsmodul 16 übergeben. Hier wird eine Schwellwertdiskriminierung anhand eines Verzögerungsbreite-Schwellwertes $s\_Schwelle$ durchgeführt, der in einer Speichereinheit 32 der Lokalisierungseinrichtung 10 fest abgelegt ist.

Das Klassifikationsmodul 30 liefert das Ergebnis der Diskriminierung ($s < s\_Schwelle$ oder $s \geq s\_Schwelle$) an ein Untermodell-Auswahlmodul 34 des Ortsbestimmungsmoduls 16, das in Abhängigkeit vom Diskriminierungsergebnis und dem entsprechenden, vom Modul 12 gelieferten TA-Wert für die momentan abzuarbeitende Funkstrecke auf eine der beiden in der Speichereinheit 18 abgelegten Wahrscheinlichkeitsdichteverteilungen $p\_1$ oder $p\_2$ zugreift, um eine Wahrscheinlichkeitsdichteverteilung für eine konkrete Folge von x-Werten zu erzeugen, ausgedrückt in TA-Einheiten, wobei 1 TA = 555 m bedeutet.

Diese konkrete Wahrscheinlichkeitsdichteverteilung wird der Optimierungseinheit 36 übergeben. Diese berechnet aus den konkreten Wahrscheinlichkeitsdichteverteilungen für drei Funkstrecken (sofern drei Basisstationen jeweils einen TA-Wert übermittelt haben) eine Optimierung der Kostenfunktion $K = \pi\_i\, p\_i(x\_i|TA\_i)$, wobei hier die Wahrscheinlichkeitsdichteverteilung $p\_i$ jeweils eine konkrete Verteilung, d.h. eine der beiden Verteilungen $p\_1$ und $p\_$

2 bezeichnet.

Die geographischen Positionen der Basisstationen gehen in die Optimierung über die Beziehung x_i = |x_w - BTS_i| ein, wobei x_w und BTS_i hier als Positionsvektoren bezüglich eines gewählten kartesischen Koordinatensystems zu verstehen sind und BTS_i der Positionsvektor der BTS der jeweiligen Basisstation ist. Diese Zusammenhänge sind dem Fachmann bekannt. Das Optimierungsergebnis, d.h. die Ausgabe der Position bzw. des Ortes des Mobilfunkendgerätes 1 erfolgt über ein Ausgabemodul 40 beispielsweise in eine Speichereinheit oder auf einen Anzeigeschirm des Mobilfunkendgerätes.

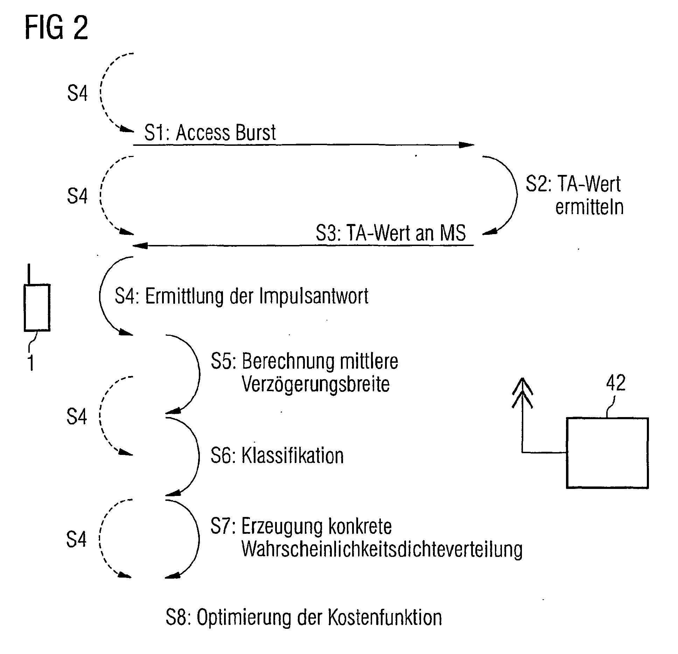

Der Ablauf eines erfindungsgemäßen Verfahrens unter Verwendung der in der Fig. 1 dargestellten Lokalisierungseinrichtung 10 wird nunmehr anhand der Fig. 2 geschildert. Zur Vereinfachung der Darstellung wird lediglich die Kommunikation zwischen Mobilfunkendgerät 1 und einer Basisstation 42 dargestellt, die Kommunikation mit den weiteren Basisstationen verläuft analog.

In einem Schritt S1 sendet die Mobilstation 1 einen Access Burst über den Random Access Chanel an die Basisstation. Im Schritt S2 bestimmt die Basisstation hieraus den Timing-Advance-Wert und sendet diesen in einem Schritt S3 über den Access Grant Chanel an die Mobilstation 1 zurück. Die Schritte S1 bis S3 sind dem Fachmann für GSM-Systeme wohlbekannt.

In einem Schritt S4 bestimmt die Lokalisierungseinrichtung 10, genauer gesagt das Impulsantwort-Ermittlungsmodul 20 (vgl. Fig. 1), für jeden von der Basisstation 42 empfangenen Burst eine Impulsantwort-Datensequenz. Diese Vermessung empfangener Bursts erfolgt grundsätzlich ständig, was durch die Mehrzahl gestrichelter, ebenfalls mit "S4" bezeichneter Pfeile angedeutet wird.

Die Daten gehen aus der Kreuzkorrelation der jeweils in der Midambel empfangenen und in der Mobilstation 1 in der Speichereinheit 24 gespeicherten Trainingssequenz hervor. Die Impulsantwortdaten werden von dem Ermittlungsmodul 20 dem Kenngrößen-Berechnungsmodul 26 übergeben, welches die Anzahl zu berücksichtigender Bursts, in dem hier beschriebenen Beispiel also zehn Bursts, in einem Zwischenspeicher 28 speichert.

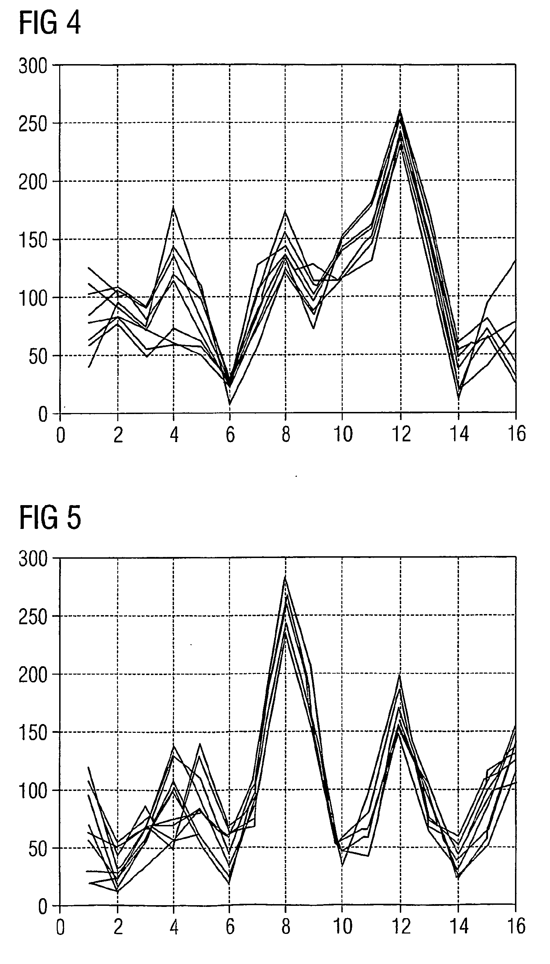

Form und Aussehen der Impulsantwortdaten werden nunmehr anhand der Figuren 3 bis 5 diskutiert. Die in den Figuren gezeigten jeweils zehn Impulsantworten sind diejenigen der ersten (Fig. 3), zweiten (Fig. 4) und dritten (Fig. 5) Funkstrecke bzw. Basisstation. Entlang der x-Achse der Figuren ist jeweils ein Sample-Index $\tau$ der Korrelationsfunktion aufgetragen. Entlang der y-Achse ist die relative Amplitude dieser Korrelationsfunktion angegeben.

Mehrwegeausbreitung mit großen Laufzeitunterschieden ist in den Kanalimpulsantworten durch mehrere getrennte oder verbreiterte Maxima erkennbar. So zeigen die Impulsantworten der ersten Funkstrecke, Fig. 3, ein einzelnes stark ausgeprägtes Maximum, während die sich für die zweite und dritte Funkstrecke ergebenden Impulsantworten mehrere Maxima aufweisen.

Die Impulsantworten können besonders vorteilhaft durch die Kenngrößen mittlere Verzögerung $\mu$ und mittlere Verzögerungsbreite s charakterisiert werden (Schritt S5 in Fig. 2). Dazu wird zunächst die normierte Impulsantwort R($\tau$) berechnet, indem die Beträge der Impulsantwort durch die Summe der Beträge der Impulsantwort geteilt wird. Die Summe von R($\tau$) ergibt somit den Wert 1.

Die mittlere Verzögerung $\mu$ wird bestimmt als:

$$\mu = \sum \tau \, R(\tau).$$

Die mittlere Verzögerungsbreite wird gemäß dem Ausdruck

$$s = \sum (\tau - \mu)^2 R(\tau)$$

berechnet. Ein großer Wert für die mittlere Verzögerungsbreite indiziert eine starke Mehrwegeausbreitung mit großen Laufzeitunterschieden. Ein kleiner Wert deutet hingegen auf geringe Laufzeitunterschiede bei einer möglichen Mehrwegeausbreitung hin. Bei dem hier geschilderten Ausführungsbeispiel ergeben sich für die Basisstationen 1 bis 3 der Figuren 3 bis 5 die in der nachfolgenden Tabelle angegebenen Werte für die mittlere Verzögerung bzw. die mittlere Verzögerungsbreite.

| | Fig. 3 | Fig. 4 | Fig. 5 |
|---|---|---|---|
| mittlere Verzögerung | 8.98 | 9.41 | 8.77 |

(fortgesetzt)

|  | Fig. 3 | Fig. 4 | Fig. 5 |
|---|---|---|---|
| mittlere Verzögerungsbreite | 2.41 | 5.09 | 4.52 |

Im Schritt S5 wird zunächst über die letzten zehn Impulsantworten gemittelt; aus dieser gemittelten Impulsantwort wird sodann der Kennwert der Kenngröße s ermittelt. Natürlich könnte auch so vorgegangen werden, dass zunächst die Kenngröße s für jede der zehn Impulsantworten berechnet wird, und dann die berechneten zehn Kennwerte gemittelt werden.

Die im Schritt S5 berechnete mittlere Verzögerungsbreite s für jede Funkstrecke bzw. Basisstation wird von dem Kenngrößen-Berechnungsmodul 26 an das Klassifikationsmodul 30 gegeben. Dieses entnimmt der ihm zugeordneten Speichereinheit 32 den Schwellwert der Verzögerungsbreite s_Schwelle, der in dem hier geschilderten Ausführungsbeispiel s_Schwelle = 3.0 beträgt, und führt mit diesem im Schritt S6 eine Schwellwertdiskriminierung des jeweils übergebenen Wertes der mittleren Verzögerungsbreite s durch.

Die durchgeführte Schwellwertdiskriminierung ergibt, dass die mittlere Verzögerungsbreite der Impulsantwort der ersten Basisstation (vgl. Fig. 3 und obenstehende Tabelle) kleiner ist als der Schwellwert, während die mittlere Verzögerungsbreite der Impulsantwort der zweiten und dritten Funkstrecke jeweils größer ist als der Schwellenwert s_Schwelle.

Der Schritt S6 wird abgeschlossen, indem das Klassifikationsmodul 30 das Klassifikationsergebnis an das Untermodell-Auswahlmodul 34 liefert, das in Reaktion auf dieses Ergebnis eine der beiden Verteilungen p_1 bzw. p_2 für die weitere Verarbeitung heranzieht.

Eine große mittlere Verzögerungsbreite s bewirkt eine erhöhte Ungenauigkeit der innerhalb der Basisstation berechneten TA-Werte. Die Unsicherheit der TA-Schätzung soll durch das Lokalisierungsmodell, d.h. die Wahrscheinlichkeitsdichteverteilung p(x|TA) erfasst werden. Mit anderen Worten, die Verteilung p(x|TA) sollte bei größerer Verzögerungsbreite auch größere Streuungen aufweisen.

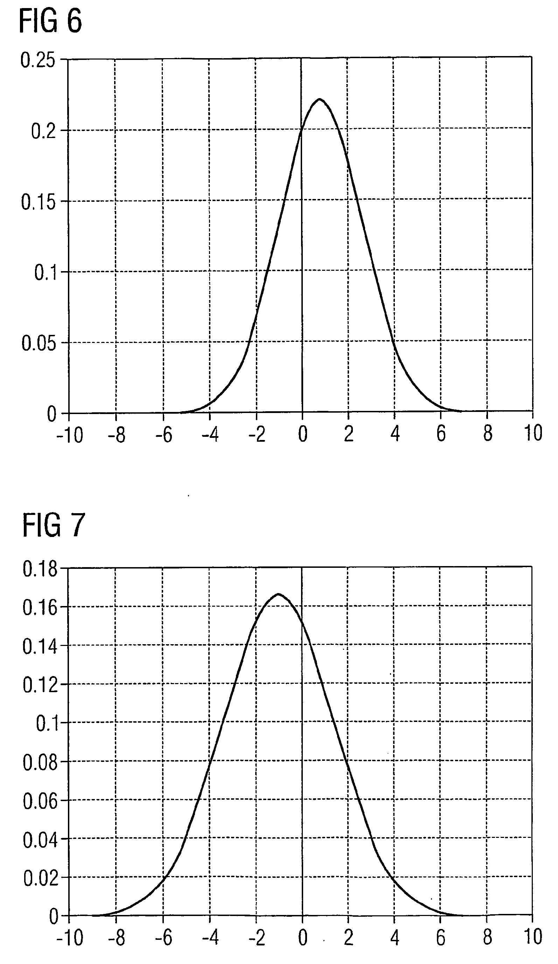

Parameter für die diesem Ausführungsbeispiel zugrundegelegten Wahrscheinlichkeitsdichteverteilungen p_1 und p_2 für einen Schwellwert s_Schwelle = 3 sind in der unten folgenden Tabelle dargestellt. Diese Parameter haben sich durch Messungen im Feld für das hier geschilderte Ausführungsbeispiel ergeben. Die sich ergebenden Verteilungsdichten p_1 und p_2 sind in den Figuren 6 und 7 dargestellt.

|  | Mittelwert | Standardabweichung |
|---|---|---|
| mittlere Verzögerungsbreite < 3 | 469 m | 999 m |
| mittlere Verzögerungsbreite > 3 | -558 m | 1333 m |

Aus der Tabelle ist zu ersehen, dass eine unterschiedliche mittlere Verzögerungsbreite zu unterschiedlichen Verteilungsdichten führt. Große mittlere Verzögerungsbreiten führen dazu dass die berechneten TA-Werte mit großer Ungenauigkeit bzw. Unsicherheit behaftet sind. Anders ausgedrückt, entsprechen die TA-Werte den tatsächlichen geographischen Abständen zwischen Basisstation und Endgerät nur mit großen Schwankungsbreiten. Kleine mittlere Verzögerungsbreiten bedeuten hingegen, dass die TA-Werte den Abstand mit geringer Ungenauigkeit beschreiben.

Erfindungsgemäß berücksichtigt das Lokalisierungsmodell diese Aussagen. Dies geschieht (bei diesem Ausführungsbeispiel) dadurch, dass das Lokalisierungsmodell nicht, wie bei herkömmlichen Systemen, nur eine einzige Wahrscheinlichkeitsdichteverteilung umfasst, sondern deren zwei, nämlich eben die Verteilungen p_1 und p_2. Insbesondere die mittlere Verzögerungsbreite kann somit zur Anpassung des Lokalisierungsmodells auf sinnvolle Weise genutzt werden.

Die Verteilung p_1 und p_2 sind jeweils als eigenständige Lookup-Tables in der Speichereinheit 18 abgelegt, d.h. mit vorgegebenen Werten für jeden x|TA-Wert. In dem Auswahlmodul 34 wird daraus im Schritt S7 eine konkrete Wahrscheinlichkeitsdichteverteilung erzeugt, die für eine Folge von x-Werten (angegeben in Metern) Wahrscheinlichkeitswerte angibt.

Im Schritt S8 wird schließlich in der Optimierungseinheit 36 die sich aus den konkreten Verteilungen für die drei Funkstrecken bzw. Basisstationen ergebende, weiter oben angegebene Kostenfunktion optimiert, d.h. das Produkt der Wahrscheinlichkeiten maximiert. Hieraus ergibt sich die wahrscheinlichste vektorielle Position x w des Mobilfunkendgerätes 1. Die Positionen der Basisstationen des betreffenden GSM-Netzes liegen im Endgerät 1 vor. Sie werden durch eine auf dem Endgerät zu diesem Zweck implementierte Java-Applikation mittels einer SMS automatisch von einem Server heruntergeladen. Alternativ könnten die Positionen auch auf einer in das Endgerät 1 eingeführten SIM-Karte gespeichert vorliegen.

Bei dem hier geschilderten Ausführungsbeispiel basiert das Lokalisierungsmodell auf genau zwei Wahrscheinlichkeitsdichteverteilungen. Selbstverständlich ist es ebenso möglich, dass das Lokalisierungsmodell auf drei oder mehr Wahrscheinlichkeitsdichteverteilungen basiert. Hierfür ist die Klassifizierung der Breite der Impulsantworten entsprechend anzupassen. Ebenso ist es denkbar, die Verteilungen statt in Form von Lookup-Tables in Form eines einzigen algorithmischen Ausdrucks zu implementieren, etwa basierend auf einem allgemeinen Ausdruck für eine Gaußverteilung. Ausgehend von diesem Ausdruck kann dann jeweils in Reaktion auf eine Klassifizierung einer Impulsantwort eine konkrete Wahrscheinlichkeitsdichteverteilung konstruiert werden. Das Lokalisierungsmodell basiert in diesem Falle also auf einer beliebig großen Vielfalt von Wahrscheinlichkeitsdichteverteilungen.

Statt von den Kenngrößen der mittleren Verzögerung und mittleren Verzögerungsbreite, wie sie im Rahmen des Ausführungsbeispiel beschrieben wurden, können zusätzlich oder alternativ auch andere Kenngrößen zur Beschreibung der relativen Breite der Impulsantwort und nachfolgenden Auswahl einer geeigneten Wahrscheinlichkeitsdichteverteilung herangezogen werden.

Der (typischerweise von der Basisstation ermittelte) TA-Wert bzw. die Funkstreckenlänge kann auch in anderer Weise als in dem Ausführungsbeispiel geschildert korrigiert werden. In den Figuren 4 und 5 sind Impulsantworten zu sehen, bei denen bereits vor dem Hauptmaximum deutliche Nebenmaxima auftreten. Dies deutet darauf hin, dass nicht der direkte Pfad zum Hauptmaximum korrespondiert, sondern ein Reflexionspfad. In erster Näherung kann man also den gemessenen TA-Wert um die Differenz zwischen erstem Maximum und Hauptmaximum korrigieren.

Bei dem oben geschilderten Ausführungsbeispiel charakterisieren allerdings die in den Figuren 3 bis 5 gezeigten Impulsantworten die Downlink-Richtung. Die Basisstation misst jedoch den TA-Wert in Uplink-Richtung (auf einer anderen Frequenz). Von daher kann nicht eindeutig gesagt sagen, welches der in den Figuren 4 und 5 gezeigten Maxima den entscheidenden Anteil zur TA-Berechnung in der Basisstation geliefert hat.

Da die Impulsantwort in Uplink-Richtung in dem Mobilfunkendgerät nicht bekannt ist, kann es sich als sinnvoll erweisen, nicht unmittelbar die Differenz zwischen erstem Maximum und Hauptmaximum als Korrekturwert heranzuziehen, sondern vielmehr einen gewichteten Mittelwert der Positionen von Hauptmaximum, erstem Maximum und mittlerer Verzögerungsbreite. Optimale Gewichtungen hierfür können durch Messungen im Feld ermittelt werden.

Diese Verfahren der Korrektur der gemessenen Funkstreckenlänge können alternativ oder zusätzlich zu der Bestimmung von Untermodellen, d. h. Wahrscheinlichkeitsdichteverteilungen, des Lokalisierungsmodells über eine Kenngröße wie die mittlere Verzögerungsbreite verwendet werden.

In dem Ausführungsbeispiel wurde die Arbeitsweise einer erfindungsgemäßen Lokalisierungseinrichtung geschildert, die in einer Mobilstation bzw. einem Mobilfunkendgerät vorliegt. Prinzipiell kann eine derartige Lokalisierungseinrichtung auch auf Netzwerkseite verwendet werden, also etwa einer BSC oder einer MSC eines GMS-Netzes zugeordnet sein. In diesem Fall würde die Bestimmung des TA-Wertes ebenso wie die Vermessung der Impulsantwort in Bezug auf die Uplink-Richtung erfolgen. In diesem Falle könnte ein vereinfachtes Verfahren zur Korrektur des TA-Wertes angewendet werden, bei dem die Positionen des ersten Maximums und des Hauptmaximums ausgewertet werden.

Die Lokalisierungseinrichtung könnte verteilt über Mobilfunkendgerät und Netzwerkeinrichtungen vorliegen, wobei beispielsweise die Breite der Impulsantworten im Mobilfunkendgerät analysiert wird. In diesem Fall wird der Wert einer Kenngröße, etwa der mittleren Verzögerungsbreite, über die Luftschnittstelle übermittelt, etwa in einem Signalisierungskanal. Die weiteren Lokalisierungsberechnungen werden im Netz durchgeführt. So kann das Mobilfunkendgerät dazu ausgebildet sein, TA-Werte und Kenngröße/n an einen Webserver zu liefern. Auf diesem ist ein erfindungsgemäßes Lokalisierungsmodell sowie ein Algorithmus zur Optimierung einer entsprechenden Kostenfunktion in Form einer Applikation implementiert, die die wahrscheinlichste Position des Endgerätes an dieses zurückliefert.

Die Module bzw. Einheiten der Lokalisierungseinrichtung können in Hardware, Firmware und/oder Software ausgeführt sein. Da stets eine Mehrzahl von Impulsantworten von einer Mehrzahl von Basisstationen vermessen werden, können Komponenten der Lokalisierungseinrichtung (bei dem obigen Ausführungsbeispiel insbesondere das Impulsantwort-Ermittlungsmodul, das Kenngrößen-Berechnungsmodul, Bezugzeichen 20 und 26 in Fig. 1) für jede zu vermessende Basisstation als eigenes Software-Objekt für die Dauer der Vermessung vorliegen. In weiteren Komponenten (Ortsbestimmungsmodul 16 in obigem Beispiel) werden die Verteilungsbreiten oder sonstigen Kenngrößen der einzelnen Basisstationen bzw. Funkstrecken zusammengeführt und gemeinsam ausgewertet, beispielsweise bei der Optimierung der Kostenfunktion.

Die Erfindung erlaubt somit die Realisierung eines einfachen Lokalisierungsverfahrens über die Bewertung der Güte von Funkstreckenlängen und die Integration dieser Ergebnisse in ein Lokalisierungsmodell. Hierdurch kann ein, insbesondere probabilistisches, Lokalisierungsmodell an die jeweils vorliegenden Verhältnisse angepasst werden. Ein weiterer Vorteil dieses Verfahrens liegt darin, dass die Bewertung der TA-Werte ausschließlich innerhalb des Mobilfunkendgerätes durchgeführt werden kann. Somit liegt ein Lokalisierungsverfahren vor, das von der Netzinfrastruktur völlig unabhängig ist. Es sind also keine aufwendigen Zusatzeinrichtungen oder sonstige Installationen bzw. Implementierungen auf Netzwerkseite erforderlich.

Im Geltungsbereich der Erfindung, der ausschließlich durch die nachfolgenden Ansprüche angegeben wird, sind durch fachmännisches Handeln noch viele weitere Ausführungsformen denkbar.

Bezugszeichenliste

1 Mobilfunkendgerät
10 Lokalisierungseinrichtung
12 Einlesemodul
14 Speichereinheit des Mobilfunkendgerätes
16 Ortsbestimmungsmodul
18 Speichereinheit für Lokalisierungsmodell
20 Impulsantwort-Ermittlungsmodul
22 Zwischenspeicher des Mobilfunkendgerätes für empfan- gene Bursts
24 Speichereinheit für Trainingssequenz
26 Kenngrößen-Berechnungsmodul
28 Zwischenspeicher für Impulsantwortdaten
30 Klassifikationsmodul
32 Speichereinheit für Schwellenwert der Verzögerungs- breite
34 Untermodell-Auswahlmodul des Ortsbestimmungsmoduls
36 Optimierungseinheit
40 Ausgabemodul
42 Basisstation
S1 Access Burst an Basisstation übermitteln
S2 TA-Wert in der Basisstation ermitteln
S3 TA-Wert an Mobilfunkendgerät übermitteln
S4 Vermessung der Bursts von der BS: Ermittlung der Im- pulsantwort
S5 Berechnung der mittleren Verzögerungsbreite p
S6 Klassifikation durch Schwellwertentscheidung: welche Wahrscheinlichkeitsdichteverteilung ist heranzuzie- hen ?
S7 Erzeugung einer konkreten Wahrscheinlichkeitsdichte- verteilung
S8 Optimierung der Kostenfunktion unter Verwendung der heranzuziehenden Wahrscheinlichkeitsdichteverteilun- gen

**Patentansprüche**

**1.** Verfahren zur Lokalisierung eines Mobilfunkendgerätes (1) über die Bestimmung des geographischen Abstandes zwischen diesem und Basisstationen (42) eines Mobilfunknetzes, wobei

- eine Funkstreckenlänge für jede Funkstrecke zwischen Mobilfunkendgerät (1) und jeweils einer der Basisstationen (42) bestimmt wird (S1-S3),
- aus den Funkstreckenlängen und einem vorgegebenen Lokalisierungsmodell, durch welches für jede einer Mehrzahl vorgegebener Funkstreckenlängen ein Zusammenhang zwischen Funkstreckenlänge und Abstandswerten definiert wird, der Ort des Mobilfunkendgerätes (1) berechnet wird,
**dadurch gekennzeichnet, dass**
- für jede Funkstrecke Impulsantwortdaten ermittelt werden (S4), die eine Korrelation von Daten zwischen Mobilfunkendgerät (1) und Basisstation (42) übermittelter Bursts mit einer vorgegebenen Datensequenz repräsentieren,
- aus den Impulsantwortdaten jeweils ein Wert mindestens einer die Impulsantwort charakterisierenden Kenngröße (S5) berechnet wird,
- von Untermodellen des Lokalisierungsmodells eines in Abhängigkeit von dem jeweils berechneten Wert der Kenngröße für die Ortsberechnung herangezogen wird (S6-S8).

**2.** Verfahren nach Anspruch 1,
**dadurch gekennzeichnet, dass**
die Kenngröße die mittlere Verzögerungsbreite der Impulsantwort ist (S5).

**3.** Verfahren nach Anspruch 1 oder 2,
**dadurch gekennzeichnet, dass**
die Kenngrößen Positionen und Höhen von mindestens zwei Maxima der Impulsantwort, insbesondere von erstem Maximum und Hauptmaximum, umfassen.

4. Verfahren nach einem der vorhergehenden Ansprüche,
**dadurch gekennzeichnet, dass**
das Lokalisierungsmodell als Untermodelle mindestens zwei Wahrscheinlichkeitsdichteverteilungen (Fig. 6, 7) umfasst, die jeweils die Wahrscheinlichkeit von Abstandswerten bei definierten Funkstreckenlängen repräsentieren.

5. Verfahren nach Anspruch 4,
**dadurch gekennzeichnet, dass**
die Wahrscheinlichkeitsdichteverteilungen unterschiedliche Verteilungsbreiten aufweisen.

6. Verfahren nach Anspruch 4 oder 5,
**dadurch gekennzeichnet, dass**
die Wahrscheinlichkeitsdichteverteilungen unterschiedliche Positionen der Maxima aufweisen.

7. Verfahren nach einem der Ansprüche 4 bis 6,
**dadurch gekennzeichnet, dass**
die Feststellung der heranzuziehenden Wahrscheinlichkeitsdichteverteilung anhand einer Klassifikation des Wertes der Kenngröße erfolgt (S6).

8. Verfahren nach einem der vorhergehenden Ansprüche,
**dadurch gekennzeichnet, dass**
das Lokalisierungsmodell Untermodelle umfasst, die jeweils eine Korrektur der Funkstreckenlänge angeben, die aus der Länge der Funkstrecke und mindestens einer Kenngröße berechnet wird.

9. Verfahren nach Anspruch 8,
**dadurch gekennzeichnet, dass**
die Länge der Funkstrecke mit einem gewichteten Mittelwert aus den Werten der Position des Hauptmaximums und des ersten Maximums und der mittleren Verzögerungsbreite korrigiert wird.

10. Verfahren nach einem der vorhergehenden Ansprüche,
**dadurch gekennzeichnet, dass**
zur Bestimmung der wahrscheinlichsten Abstandswerte in Bezug auf die Basisstationen eine Kostenfunktion optimiert wird, die aus der oder den herangezogenen Wahrscheinlichkeitsdichteverteilung/en ermittelt wird (S8).

11. Lokalisierungseinrichtung (10) zur Durchführung des Verfahrens nach einem der vorhergehenden Ansprüche, mit einem Einlesemodul (12) zum Einlesen von Funkstreckenlängen zwischen einem Mobilfunkendgerät (1) und Basisstationen (42) eines Mobilfunknetzes aus einer Speichereinrichtung (14) der Basisstation oder des Mobilfunkendgerätes (1),
einer Speichereinheit (18) zum Speichern eines Lokalisierungsmodells und
einem mit dem Einlesemodul (12) und der Speichereinheit (18) verbundenen Ortsbestimmungsmodul (16) zum Bestimmen des wahrscheinlichsten Ortes des Mobilfunkendgerätes (1) aus den Funkstreckenlängen und dem Lokalisierungsmodell,
**gekennzeichnet durch**
ein Impulsantwort-Ermittlungsmodul (20) zum Ermitteln von Impulsantwortdaten für jede Funkstrecke, die eine Korrelation von Daten von zwischen Mobilfunkendgerät (1) und der Basisstation (42) übermittelten Bursts repräsentieren,
ein mit dem Impulsantwort-Ermittlungsmodul (20) verbundenes Kenngrößen-Berechnungsmodul (26) zur Berechnung eines Wertes mindestens einer die Impulsantwort charakterisierenden Kenngröße aus den Impulsantwortdaten,
ein mit dem Kenngrößen-Berechnungsmodul (26) verbundenes Untermodell-Auswahlmodul (34) zur Auswahl eines der Untermodelle des Lokalisierungsmodells in Abhängigkeit von dem im Berechnungsmodul berechneten Wert der Kenngröße.

12. Lokalisierungseinrichtung nach Anspruch 11,
**dadurch gekennzeichnet, dass**
eine Mehrzahl von Wahrscheinlichkeitsdichteverteilungen in der Speichereinheit (18) in Form einer oder mehrerer Lookup-Tables abgelegt ist.

**13.** Lokalisierungseinrichtung nach Anspruch 11 oder 12,
**dadurch gekennzeichnet, dass**
das Untermodell-Auswahlmodul (34) ausgebildet ist, um in Abhängigkeit vom Wert der Kenngröße für jede Funkstrecke eine der in der Speichereinheit (18) gespeicherten Wahrscheinlichkeitsdichteverteilungen für das Ortsbestimmungsmodul (16) zu bestimmen, und das Ortsbestimmungsmodul (16)ausgebildet ist (36), die bestimmte Wahrscheinlichkeitsdichteverteilung für die Ortsbestimmung heranzuziehen.

**14.** Lokalisierungseinrichtung nach einem der Ansprüche 11 bis 13,
**gekennzeichnet durch**
ein mit dem Kenngrößen-Berechnungsmodul (26) und dem Untermodell-Auswahlmodul (34) verbundenes Klassifikationsmodul (30) zum Klassifizieren der von dem Kenngrößen-Berechnungsmodul (26) berechneten Kenngröße und Weiterleiten des Klassifizierungsergebnisses an das Untermodell-Auswahlmodul (34).

**15.** Mobilfunkendgerät (1) mit einer Lokalisierungseinrichtung (10) nach einem der Ansprüche 11 bis 14.

**16.** Basisstation mit einer Lokalisierungseinrichtung nach einem der Ansprüche 11 bis 14.

## Claims

**1.** Method for localizing a mobile radio terminal (1) by determining the geographical distance between the same and base stations (42) of a mobile radio network, wherein

- a radio-link length is determined (S1-S3) for each radio link between the mobile radio terminal (1) and one of the base stations (42),
- the location of the mobile radio terminal (1) is calculated from the radio-link lengths and a predefined localization model, by which a connection between radio-link length und distance values is defined for each of a plurality of predefined radio-link lengths,
**characterized in that**
- impulse response data is determined (S4) for each radio link, representing a correlation of data from bursts transmitted between mobile radio terminal (1) and base station (42) with a predefined data sequence,
- a value of at least one parameter (S5) characterizing the impulse response is calculated from the impulse response data
- one of the submodels of the localization model is used for the localization in accordance with the respective value calculated for the parameter (S6-S8).

**2.** Method according to Claim 1,
**characterized in that**
the parameter is the mean delay width of the impulse response (S5).

**3.** Method according to Claim 1 or 2,
**characterized in that** the parameters comprise positions and
levels of at least two impulse response peaks, in particular of the first peak and main peak.

**4.** Method according to one of the above claims,
**characterized in that**
the localization model comprises, as submodels, at least two probability density distributions (Fig. 6, 7), each of which represents the probability of distance values for defined radio-link lengths.

**5.** Method according to Claim 4,
**characterized in that**
the probability density distributions have different distribution widths.

**6.** Method according to Claim 4 or 5,
**characterized in that**
the probability density distributions have different peak positions.

**7.** Method according to one of claims 4 to 6,

**characterized in that**
the probability density distribution to be used is determined on the basis of a classification of the value of the parameter (S6).

8. Method according to one of the above claims,
**characterized in that**
the localization model comprises submodels, each of which specifies a correction to the radio-link length, said correction being calculated from the length of the radio link and at least one parameter.

9. Method according to Claim 8,
**characterized in that**
the length of the radio link is corrected using a weighted mean value from the values of the position of the main peak and the first peak, and the mean delay width.

10. Method according to one of the above claims,
**characterized in that,**
in order to determine the most probable distance values with reference to the base stations, a cost function is optimized which is determined from the probability density distribution(s) used (S8).

11. Localization device (10) for implementing the method according to one of the above claims, comprising a read-in module (12) for reading in radio-link lengths between a mobile radio terminal (1) and base stations (42) of a mobile radio network from a storage device (14) of the base station or of the mobile radio terminal (1), a storage unit (18) for storing a localization model, and a localization module (16) connected to the read-in module (12) and the storage unit (18) for determining the most probable location of the mobile radio terminal (1) from the radio-link lengths and the localization model,
**characterized by**
an impulse response determination module (20) for determining impulse response data for each radio link, which represents a correlation of data from bursts transmitted between mobile radio terminal (1) and the base station (42), a parameter calculation module (26) connected to the impulse response determination module (20) for calculating a value of at least one parameter characterizing the impulse response from the impulse response data, a submodule selection module (34) connected to the parameter calculation module (26) for selecting one of the submodels of the localization model in accordance with the value of the parameter calculated in the calculation module.

12. Localization device according to claim 11,
**characterized in that**
a plurality of probability density distributions is stored in the storage unit (18) in the form of one or more lookup tables.

13. Localization device according to claim 11 or 12,
**characterized in that**
the submodel selection module (34) is designed in order to determine one of the probability density distributions for the localization module (16) stored in the storage unit (18) in accordance with the value of the parameter for each radio link, and **in that** the localization module (16) is designed (36) to use the determined probability density distribution for localization.

14. Localization device according to one of claims 11 to 13,
**characterized by**
a classification module (30) connected to the parameter calculation module (26) and the submodel selection module (34), for classifying the parameter calculated by the parameter calculation module (26) and forwarding the classification result to the submodel selection module (34).

15. Mobile radio terminal (1) having a localization device (10) according to one of claims 11 to 14.

16. Base station having a localization device according to one of claims 11 to 14.

**Revendications**

1. Procédé de localisation d'un terminal (1) de radiotéléphonie mobile par la détermination de la distance géographique entre celui-ci et des stations (42) de base d'un réseau de radiotéléphonie mobile, dans lequel

   - on détermine une longueur de liaison radio, pour chaque liaison radio entre le terminal (1) de radiotéléphonie mobile et respectivement l'une des stations (42) de base (S1 à S3),
   - on calcule l'emplacement du terminal (1) de radiotéléphonie mobile, à partir des longueurs de liaison radio et d'un modèle prescrit de localisation, par lequel on définit, pour chacune d'une multiplicité de longueurs de liaison radio, une relation entre longueur de liaison radio et valeurs de distance, **caractérisé en ce que**
   - pour chaque liaison radio, on détermine (S4) des données de réponse impulsionnelle, qui représentent une corrélation de données entre des rafales transmises entre le terminal (1) de radiotéléphonie mobile et la station (42) de base et ayant une séquence de données prescrite,
   - on calcule à partir de données de réponse impulsionnelle respectivement une valeur d'au moins l'une des caractéristiques (S5) caractérisant la réponse impulsionnelle,
   - parmi des sous-modèles du modèle de localisation, on tire partie (S6 à S8), pour le calcul de l'emplacement, de l'un d'entre eux en fonction de la valeur calculée respectivement de la caractéristique.

2. Procédé suivant la revendication 1,
   **caractérisé en ce que**
   la caractéristique est la largeur moyenne de retard de la réponse impulsionnelle (S5).

3. Procédé suivant la revendication 1 ou 2,
   **caractérisé en ce que**
   les caractéristiques comprennent des positions et des amplitudes d'au moins deux maximum de la réponse impulsionnelle, notamment du premier maximum et du maximum principal.

4. Procédé suivant l'une des revendications précédentes,
   **caractérisé en ce que**
   le modèle de localisation comprend comme sous-modèles au moins deux répartitions de densité de probabilité (Fig. 6, 7) qui représentent respectivement la probabilité de valeur de distance pour des longueurs de liaison radio définies.

5. Procédé suivant la revendication 4,
   **caractérisé en ce que**
   les répartitions de densité de probabilité ont des largeurs de répartition différentes.

6. Procédé suivant la revendication 4 ou 5,
   **caractérisé en ce que**
   les répartitions de densité de probabilité ont des positions différentes des maximum.

7. Procédé suivant l'une des revendications 4 à 6,
   **caractérisé en ce qu'**on effectue la constatation de la répartition de densité de probabilité, dont on tire partie, au moyen d'une classification de la valeur de la caractéristique (S6).

8. Procédé suivant l'une des revendications précédentes,
   **caractérisé en ce que**
   le modèle de localisation comprend des sous-modèles, qui indiquent respectivement une correction de la longueur de liaison radio, qui est calculée à partir de la longueur de la liaison radio et d'au moins une caractéristique.

9. Procédé suivant la revendication 8,
   **caractérisé en ce que**
   l'on corrige la longueur de la liaison radio par une moyenne pondérée à partir des valeurs de la position du maximum principal et du premier maximum et de la largeur de moyenne de retard.

10. Procédé suivant l'une des revendications précédentes,
    **caractérisé en ce que**
    pour la détermination des valeurs de distance les plus probables par rapport aux stations de base, on optimise une fonction de coût, qui est déterminée à partir de la répartition ou des répartitions de densité de probabilité,

dont on a tiré partie (S8).

11. Dispositif (10) de localisation pour la mise en oeuvre du procédé suivant l'une des revendications précédentes, comprenant un module (12) de lecture, pour lire des longueurs de liaison radio entre un terminal (1) de radiotéléphonie mobile et des stations (42) de base d'un réseau de téléphonie mobile dans un dispositif (14) de mémoire de la station de base ou du terminal (1) de radiotéléphonie mobile, une unité (18) de mémoire pour mémoriser un modèle de localisation et un module (16) de détermination d'emplacement relié au module (12) de lecteur et à l'unité (18) de mémoire, pour déterminer l'emplacement le plus probable du terminal (1) de radiotéléphonie mobile à partir des longueurs de liaison radio et du modèle de localisation,
**caractérisé par**
un module (20) de détermination de réponse impulsionnelle, pour déterminer des données de réponse impulsionnelle pour chaque liaison radio, qui représente une corrélation de données de rafales transmises entre le terminal (1) de radiotéléphonie mobile et entre la station (42) de base,
un module (26) de calcul de caractéristiques, relié au module (20) de détermination de réponse impulsionnelle, pour calculer une valeur d'au moins une caractéristique caractérisant la réponse impulsionnelle à partir de données de réponse impulsionnelle,
un module (34) de sélection de sous-modèles, qui est relié au module (26) de calcul de grandeur caractéristique et qui est destiné à choisir l'un des sous-modèles du modèle de localisation en fonction de la valeur de la caractéristique calculée dans le module de calcul.

12. Dispositif de localisation suivant la revendication 11,
**caractérisé en ce que**
une multiplicité de répartitions de densité de probabilité est mémorisée dans l'unité (18) de mémoire sous la forme d'une ou de plusieurs tables lookup.

13. Dispositif de localisation suivant la revendication 11 ou 12,
**caractérisé en ce que**
le module (34) de sélection de sous-modèles est constitué pour déterminer, en fonction de la valeur de la caractéristique pour chaque liaison radio, l'une des répartitions des densités de probabilité pour le module (1) de détermination de l'emplacement mémorisées dans l'unité (18) de mémoire et le module (16) de détermination de l'emplacement est constitué (36) pour tirer partie de la répartition des densités de la probabilité déterminée pour la détermination de l'emplacement.

14. Dispositif de localisation suivant l'une des revendications 11 à 13,
**caractérisé par**
un module (30) de classification, qui est relié au module (26) de calcul de caractéristique et au module (34) de sélection de sous-modèles et qui sert à classer les grandeurs calculées par le module (26) de calcul de caractéristique et à acheminer le résultat de la classification au module (34) de sélection de sous-modèles.

15. Terminal (1) de radiotéléphonie mobile ayant un dispositif (10) de localisation suivant l'une des revendications 11 à 14.

16. Station de base ayant un dispositif de localisation suivant l'une des revendications 11 à 14.

FIG 1

# FIG 2

S4

S1: Access Burst

S4

S2: TA-Wert
ermitteln

S3: TA-Wert an MS

1

S4: Ermittlung der Impulsantwort

S5: Berechnung mittlere
Verzögerungsbreite

42

S4

S6: Klassifikation

S4

S7: Erzeugung konkrete
Wahrscheinlichkeitsdichteverteilung

S8: Optimierung der Kostenfunktion

FIG 3

## FIG 4

## FIG 5

## FIG 6

## FIG 7

**EP 1 745 674 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2001004601 A1